# FASCICULE DE BREVET EUROPEEN

(11) **EP 1 495 701 B1**
(45) Date de publication et mention de la délivrance du brevet: **03.10.2007**
(21) Numéro de dépôt: 03360084.2
(22) Date de dépôt: 10.07.2003
(51) Int. Cl.: A47J 27/05

(54) **Dispositif de joint pour ustensile de cuisson dit couscoussier**
Verbindungselement für Kochgeschirr genannt Couscoustopf
Joining element for cooking untensil called couscous vessel

(43) Date de publication de la demande: 12.01.2005
(73) Titulaire: Doustaly, Laurent, 30730 Montpezat (FR); Doustaly, Nehza, 30730 Montpezat (FR)
(72) Inventeur: Doustaly, Laurent, 30730 Montpezat (FR); Doustaly, Nehza, 30730 Montpezat (FR)
(74) Mandataire: Rhein, Alain

(56) Documents cités:
- EP-A- 0 165 152
- FR-A- 2 719 882
- US-A- 1 408 356

## Description

La présente invention a pour objet un dispositif de joint pour ustensile de cuisson dit couscoussier pour la préparation du couscous.

De manière traditionnelle, un couscoussier comporte essentiellement deux parties, une partie consistant en une marmite, et une partie haute emboîtable sur ladite partie basse et consistant en un récipient à fond ajouré. La partie basse est destinée à la cuisson des légumes et de la viande entrant dans la composition du couscous, tandis que la partie haute est destinée à la cuisson de la semoule au moyen de la vapeur émanant de ladite partie basse.

Il existe essentiellement deux types de couscoussier, lesquels se différencient par leur forme, à savoir le premier, traditionnel, qui comporte deux parties haute et basse de forme galbée la section de la partie haute d'emboîtement présentant un profil de section en forme de S, tandis que le second présente une forme globalement cylindrique, les parties basse et haute étant de même diamètre. D'autre part, il existe des couscoussiers de différentes contenances et donc de différents diamètres.

Les couscoussiers actuellement utilisés présentent l'inconvénient d'une étanchéité imparfaite entre les parties haute et basse, en sorte qu'une quantité de vapeur s'échappe vers l'extérieur et ne traverse pas la semoule qui nécessite alors un temps de cuisson plus long, ce qui peut par ailleurs être préjudiciable à la cuisson des légumes et de la viande.

Pour pallier cet inconvénient, le préparateur enveloppe généralement la partie haute du couscoussier d'un morceau de tissu de préférence mouillé, tel qu'une serviette, qui s'intercale entre ladite partie haute et la partie basse pour réaliser l'étanchéité. L'étanchéité réalisée n'est cependant pas parfaite du fait notamment qu'il n'est pas aisé d'épouser parfaitement le contour extérieur de la section emboîtable de la partie haute, et le contour intérieur de l'ouverture de la partie basse. De plus, cette manière de procéder présente un risque d'inflammation du morceau de tissu.

On connaît par ailleurs par le document FR 2 719 882, un joint d'étanchéité pour ustensile de cuisine pour cuire les aliments à la vapeur et de type comprenant deux parties, une partie inférieure en forme de marmite et une partie supérieure en forme de passoire. Ce joint d'étanchéité comprend un corps et une lèvre, ledit corps étant destiné à être adapté sur le bord extrême supérieur de la marmite, tandis que la lèvre est destinée à être intercalée entre les parties inférieure et supérieure. Un tel joint présente des inconvénients et n'est pas utilisable sur un couscoussier, en effet, d'une part le corps doit présenter un profil spécifique à chaque marmite puisqu'il doit être adaptable au bord de celle-ci, et d'autre part les deux faces de la lèvres comprennent chacune un plan de joint, en sorte que pour assurer l'étanchéité les surfaces de contact des deux parties de l'ustensile doivent nécessairement être parfaites, à savoir non déformées.

La présente invention a pour but de proposer un dispositif de joint pour ustensile de cuisson dit couscoussier pour la préparation du couscous, permettant de remédier aux divers inconvénients précités, et qui est adaptable sur tous les couscoussiers existants.

Le dispositif de joint pour ustensile de cuisson dit couscoussier pour la préparation du couscous, comprenant une partie basse en forme marmite et une partie haute en forme de récipient à fond ajouré, selon l'invention se caractérise essentiellement en ce qu'il consiste en une bande de matière plastique naturelle ou synthétique, agencée en une portion de tube, destinée à recouvrir extérieurement la zone de jonction de la partie haute et de la partie basse du couscoussier.

La bande de matière plastique est suffisamment déformable pour permettre son adaptation à des couscoussiers de diamètres différents, en sorte d'en épouser le contour.

Selon une caractéristique additionnelle du dispositif selon l'invention, il comporte des moyens aptes à permettre son adaptation sur des parties hautes de formes variées.

Selon un mode de réalisation particulier du dispositif selon l'invention, les moyens aptes à permettre son adaptation sur des parties hautes de formes variées consistent en au moins une rainure ou analogue périphérique extérieure.

Une telle rainure, ou plusieurs, favorise l'enveloppement de la partie inférieure de la partie haute lorsque celle-ci présente une forme galbée.

Selon une autre caractéristique additionnelle du dispositif selon l'invention, il comporte extérieurement des moyens de préhension.

De manière avantageuse, les moyens de préhension consistent en des languettes faisant saillie vers l'extérieur.

Selon une autre caractéristique additionnelle du dispositif selon l'invention, il est réalisé en latex ou en un matériau synthétique similaire.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue en élévation d'un dispositif de joint selon l'invention.
La figure 2 représente une vue en plan du même joint.
La figure 3 représente une vue élévation avec coupe partielle d'un couscoussier équipé d'un dispositif de joint selon l'invention.
La figure 4 représente une vue schématique partielle en coupe du dispositif selon l'invention.

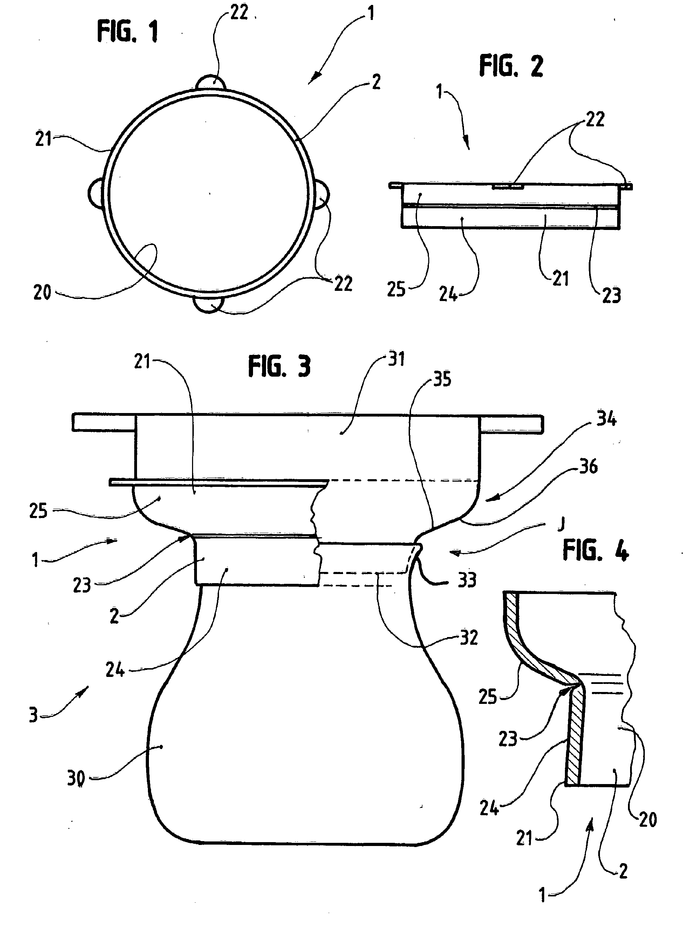

En référence aux figures 1 et 2, on peut voir un dispositif de joint 1 pour ustensile de cuisson dit couscoussier pour la préparation du couscous selon l'invention.

Ce dispositif de joint 1 se présente sous la forme d'une bande 2 de matière élastique agencée en un anneau plat ou plus exactement une portion de tube, extensible dans le sens diamétral.

La bande 2 comporte une paroi intérieure 20 lisse et une paroi extérieure 21 d'un bord de laquelle font saillie vers l'extérieur des languettes 22 de préhension, en l'occurrence au nombre de quatre.

En référence maintenant à la figure 3, on peut voir un ustensile de cuisson 3 dit couscoussier pour la préparation du couscous.

Ce couscoussier 3 comporte de manière traditionnelle deux parties, une partie basse 30 consistant en une marmite, et une partie haute 31 consistant en un récipient à fond ajouré, non visible, dont la base 32 est de forme apte à permettre son emboîtement au plus juste dans l'ouverture de la partie basse 30.

Le dispositif de joint 1 selon l'invention est disposé sur le couscoussier 3 en sorte de recouvrir la zone J de jonction de la partie haute 31 et de la partie basse 30 pour étancher l'assemblage. Le dispositif de joint 1 recouvre ainsi l'extrémité supérieure 33 de la partie basse 30 et la portion inférieure 34 de la partie haute 31 s'étendant au-dessus de la base 32.

Dans l'exemple représenté le couscoussier 3 est de forme traditionnelle galbée, c'est à dire que la portion 34 présente successivement au-dessus dé la base 32, une zone concave 35 puis une zone convexe 36.

Aussi, pour faciliter la mise en place, et afin d'éviter la formation de plis préjudiciables d'une part à l'étanchéité, et d'autre part au parfait positionnement de la bande 2 sur la portion 34, la paroi extérieure 21 de la bande 2 présente une rainure périphérique 23 permettant à la bande 2, comme cela est visible sur la figure 4, d'épouser au plus juste le galbe du couscoussier 3 et notamment de la portion 34.

On notera qu'il est parfaitement possible de prévoir d'autres rainures périphériques, qu'elles soient internes ou externes, afin que le dispositif de joint 1 puisse être parfaitement adaptable à toutes les formes de couscoussier.

La mise en place du dispositif de joint 1 sur le couscoussier 3 peut être réalisée de la manière suivante, la partie inférieure 24 de la bande 2, à savoir principalement sa portion en deçà de la rainure 23, est placée sur l'extrémité supérieure 33 de la partie basse 30, tandis que sa partie supérieure 25 est repliée sur la partie inférieure 24 le temps de placer la partie haute 31 sur la partie basse 30. Puis, en s'aidant des languettes de préhension 22, la partie supérieure 25 est amenée sur la portion 24 de la parie haute 31 du couscoussier 3.

L'enlèvement du dispositif de joint 1 est bien entendu réalisé en procédant de manière inverse, en utilisant là-encore les languettes 22.

Dans le cas, non représenté, d'un couscoussier de type droit, c'est-à-dire de forme globalement cylindrique où les parties haute et basse sont de même diamètre, le dispositif de joint 1 s'adapte parfaitement, sans recourir aux facultés de la rainures 23.

Quel que soit le couscoussier utilisé, le dispositif de joint selon l'invention permet de garantir l'étanchéité de la jonction des parties haute et basse, en sorte que l'on obtient une diffusion de vapeur constante, assurant une parfaite cuisson de la semoule.

## Revendications

1. Dispositif de joint pour ustensile de cuisson dit couscoussier pour la préparation du couscous, comprenant une partie basse (30) en forme marmite et une partie haute (31) en forme de récipient à fond ajouré, **caractérisé en ce qu'**il consiste en une bande (2) de matière plastique naturelle ou synthétique, agencée en une portion de tube, destinée à recouvrir extérieurement la zone (J) de jonction de la partie haute (31) et de la partie basse (30) du couscoussier (3).

2. Dispositif selon la revendication 1, **caractérisé en ce qu'**il comporte des moyens (23) aptes à permettre son adaptation sur des parties hautes (31) de formes variées.

3. Dispositif selon la revendication 2, **caractérisé en ce que** les moyens aptes permettre son adaptation sur des parties hautes (31) de formes variées consistent en au moins une rainure (23) ou analogue périphérique extérieure.

4. Dispositif selon l'une quelconque des revendications précédentes, **caractérisé en ce qu'**il comporte extérieurement des moyens de préhension (22).

5. Dispositif selon la revendication 4, **caractérisé en ce que** les moyens de préhension consistent en des languettes (22) faisant saillie vers l'extérieur.

6. Dispositif selon l'une quelconque des revendications précédentes, **caractérisé en ce qu'**il est réalisé en latex ou en un matériau synthétique similaire.

## Claims

1. Joining element for cooking utensil called couscous vessel for preparing couscous, including a lower portion (30) in the form of a pot and an upper portion (31) in the form of an openwork-bottom container, **characterized in that** it consists of a strip (2) made of natural or synthetic plastic, arranged in a tube portion, designed to cover externally the junction area (J) of the upper portion (31) and of the lower portion (30) of the couscous vessel (3).

2. Device according to claim 1, **characterized in that** it includes means (23) capable of permitting its adaptation onto upper portions (31) having various shapes.

3. Device according to claim 2, **characterized in that** the means capable of permitting its adaptation on upper portions (31) having various shapes consist of at least one external peripheral groove (23) or similar.

4. Device according to any of the preceding claims, **characterized in that** it includes seizing means (22) externally.

5. Device according to claim 4, **characterized in that** the seizing means consist of tongues (22) protruding outwardly.

6. Device according to any of the preceding claims, **characterized in that** it is made of latex or of a similar synthetic material.

## Patentansprüche

1. Verbindungselement für Kochgeschirr, genannt Couscoustopf, für die Zubereitung von Couscous, umfassend einen unteren Teil (30) in Form von einem Topf und einen oberen Teil (31) in Form von einem Gefäß mit durchlöchertem Boden, **dadurch gekennzeichnet, daß** es aus einem Band (2) aus natürlichem oder synthetischem Kunststoff besteht, das in einem Rohrteil angeordnet ist, vorgesehen, um die Verbindungszone (J) des oberen Teils (31) und des unteren Teils (30) des Couscoustopfes (3) äußerlich zu umhüllen.

2. Vorrichtung nach Anspruch 1, **dadurch gekennzeichnet, daß** sie Mittel (23) umfaßt, die geeignet sind, um ihre Anpassung an obere Teile (31) mit verschiedenartigen Formen zu erlauben.

3. Vorrichtung nach Anspruch 2, **dadurch gekennzeichnet, daß** die Mittel, die geeignet sind, um ihre Anpassung an obere Teile (31) mit verschiedenartigen Formen zu erlauben, aus wenigstens einer äußerlichen Umkreisrille (23) oder dergleichen bestehen.

4. Vorrichtung nach irgendeinem der vorgehenden Ansprüche, **dadurch gekennzeichnet, daß** sie äußerlich Greifmittel (22) umfaßt.

5. Vorrichtung nach Anspruch 4, **dadurch gekennzeichnet, daß** die Greifmittel aus nach außen vorspringenden Laschen (22) bestehen.

6. Vorrichtung nach irgendeinem der vorgehenden Ansprüche, **dadurch gekennzeichnet, daß** sie aus Latex oder aus einem ähnlichen synthetischen Stoff vorgesehen ist.
